# EUROPEAN PATENT SPECIFICATION

(11) **EP 0 906 862 B1**
(45) Date of publication and mention of the grant of the patent: **10.12.2003**
(21) Application number: 98118280.1
(22) Date of filing: 26.09.1998
(51) Int. Cl.: B62D 3/12, B62D 5/22

(54) **Steering mechanism assembly for automotive vehicle**
Lenkungsmechanismus für Kraftfahrzeug
Mécanisme de direction pour véhicule automobile

(30) Priority: 03.10.1997 AR 10456697; 12.06.1998 US 95943
(43) Date of publication of application: 07.04.1999
(73) Proprietor: Visteon Global Technologies Inc., Dearborn, Michigan 48126 (US)
(72) Inventor: Ballester, Adrian José, Buenos Aires (AR)
(74) Representative: Copp, David Christopher

(56) References cited:
- EP-A- 0 005 322
- DE-A- 4 334 491
- GB-A- 873 553
- GB-A- 1 248 016
- US-A- 3 788 159
- US-A- 4 016 774

## Description

The invention relates generally to improvements in steering mechanism assemblies for automotive vehicles, particularly with the aim of solving problems of the mechanical design and alignment of housing elements for accommodating the various components of the steering mechanism, and particularly to a steering control linkage assembly of the kind defined in the preamble of claim 1.

A steering control linkage of that kind is disclosed in EP-A-0 005 322.

Conventional steering control linkage housings are fabricated by casting of molten aluminum or other materials. A valve housing comprised generally of cast iron is also used in the case of power steering. The fabrication of such components is attended by various problems. Complex and precise procedures are required for assembly and alignment of a cast iron valve housing with a cast aluminum steering control linkage housing, to ensure correct skew angular positioning of the components of the steering control linkage.

One reason why it is difficult to achieve proper alignment of conventional steering control linkage housings comprised of cast material is that there are two subassemblies which must be aligned:
-- the rack and its housing, and
-- the pinion, the valve system, and their housings.
The parts of the housing must be in correct skew angular alignment in order to achieve good operating characteristics of the steering system, and particularly the steering control linkage.

The alignment procedures may require different skew angular alignments depending on the particular variant of the steering system used, and necessitate the use of different casting molds for fabricating the elements of the steering control linkage housings and for adapting the power-assisted steering valve housing. For each situation, a specific skew angular alignment of the steering column shaft (pinion shaft) and the rack housing is required, in order for the steering system to function properly.

Another problem which occurs with steering systems is the undesirable noise generated by excessive frictional play between the dentation of the pinion and the dentation of the rack. Such noise is a problem in power-assisted steering systems as well as manual systems. In some cases, the vibration is absorbed by elasticity in the steering system. Otherwise it must be reduced to acceptable limits in order to avoid noise which is disagreeable to the driver and which signals improper functioning of the engaged components.

This noise problem may be due to incorrect alignment of the contoured openings in the housing, but the main cause of steering system noise is axial stresses in the joints between the housing and the chassis, which stresses give rise to a force component perpendicular to the rack bar and tending to distance the rack bar from the pinion, thereby acting counter to the means integrated in the steering assembly which are intended to regulate the relative positions of the rack and pinion.

The said axial stresses also act axially on the rack, which rack is generally mounted with releasable support means on an end bearing in the steering control linkage housing, wherewith in addition to the component of said stresses which act perpendicularly to the rack, the axial stresses give rise to an undesirable axial movement of the rack which interferes with correct interengagement of the rack and the pinion, again tending to cause the respective dentations to separate, wherewith when, in alleviation of this separation, the rack tends to return to its initial position. The result is noise, in an intensity and frequency which depend exclusively on the intensity of the abovementioned axial stresses.

The conventional means used by automobile manufacturers to address these drawbacks in steering control linkages is to use high precision molds for fabricating the housings, in order to achieve the correct alignment of the steering control linkage components. The concept is that substantial improvement in operation will result from improvements in such alignment. In addition, the known technique of providing devices which periodically regulate the position of the rack bar has been used. The general such device comprises a manually adjustable thrust bearing which is elastically urged counter to the direction of the axial stresses. These devices function well, but when over-adjusted (which is always a possibility) the result is that the rack bar is not properly re-engaged, which is detrimental to the mechanism because the re-engagement force is too great or too small, either momentarily (dynamically) or on a sustained basis.

US-A-3 788 159 discloses a rack and pinion steering assembly wherein a flat blade spring is used to radially preload the pinion against the rack.

The object of the present invention is to provide an improved steering control linkage of the aforementioned type, capable of solving the problems mentioned in the foregoing. According to the invention this object is achieved by a steering control linkage assembly as defined in Claim 1.

According to the invention means are provided for automatically and accurately positioning the pinion in proper engagement with the rack, in response to displacement of the rack due to components of the abovementioned axial stresses. These automatic positioning means are disposed in the housing element in which the pinion is housed, and comprise an elastic organ (e.g. spring, elastic annular piece, or elastic cylindrical piece) which urges the pinion component of the steering control linkage (which pinion may be conical or cylindrical) into proper engagement with the rack when the rack becomes separated from the pinion due to stress components generated by the abovementioned axial stresses.

According to a first embodiment of the automatic positioning means, said means are mounted in the immediate neighborhood of, and in cooperation with, a conical pinion disposed at the end of the steering column shaft. The dentation of said pinion corresponds to that of the rack, and does not per se provide any type of exaggerated pre-stressing against the rack. The rack receives additional support within the proposed housing element by mounting therein of a second guide bearing (pillow bearing) which keeps the rack aligned in said housing element in order to counter the generation of undesirable movement by the action of the abovementioned axial stresses.

These means of eliminating or limiting the irregular movement of the rack bar result in substantial reduction of the undesirable noise which is common with conventional steering control linkages.

According to another embodiment of the automatic positioning means for regulating the engagement of the pinion with the rack, generally cylindrical rubber-elastic pieces having eccentric openings for supporting the pinion (which pinion may be conical or cylindrical) are combined with a metallic elastic organ having axial thrust, whereby the pinion is urged elastically in directions generally toward the rack.

The invention will be better understood with the aid of preferred embodiments which will be described hereinbelow with reference to the accompanying drawings.
Fig. 1 is a partial longitudinal cross section within a plan view, of a steering control linkage which incorporates some of the improvements according to the invention, in particular improvements relating to means of automatically positioning the components involved in the engagement of the rack and pinion in said steering control linkage;
Fig. 2 is a schematic perspective view of a preferred steering control linkage housing;
Fig. 3 is a perspective view of the tubular elements of which the housing is comprised, showing the parts having contoured openings cut into them which openings are configured such that said elements can be assembled together at the appropriate skew angle;
Fig. 4 is a transverse cross section of the control linkage illustrated in Fig. 1, through the line 4-4, showing details of a first exemplary embodiment of the means of automatically positioning the components involved in the engagement of a rack and a conical pinion in response to axial stresses acting on the steering mechanism of a vehicle (i.e. automatically positioning the pinion in engagement with the rack);
Fig. 5 illustrates a second exemplary embodiment of means of such automatic positioning according to the invention;
Fig. 6 illustrates a third exemplary embodiment of means of such automatic positioning, applied to the engagement of a conventional rack by a cylindrical pinion having helicoidal dentation; and
Fig. 7 illustrates a third exemplary embodiment of means of such automatic positioning according to the invention, again applied to the engagement of a rack by a cylindrical pinion having helicoidal dentation.

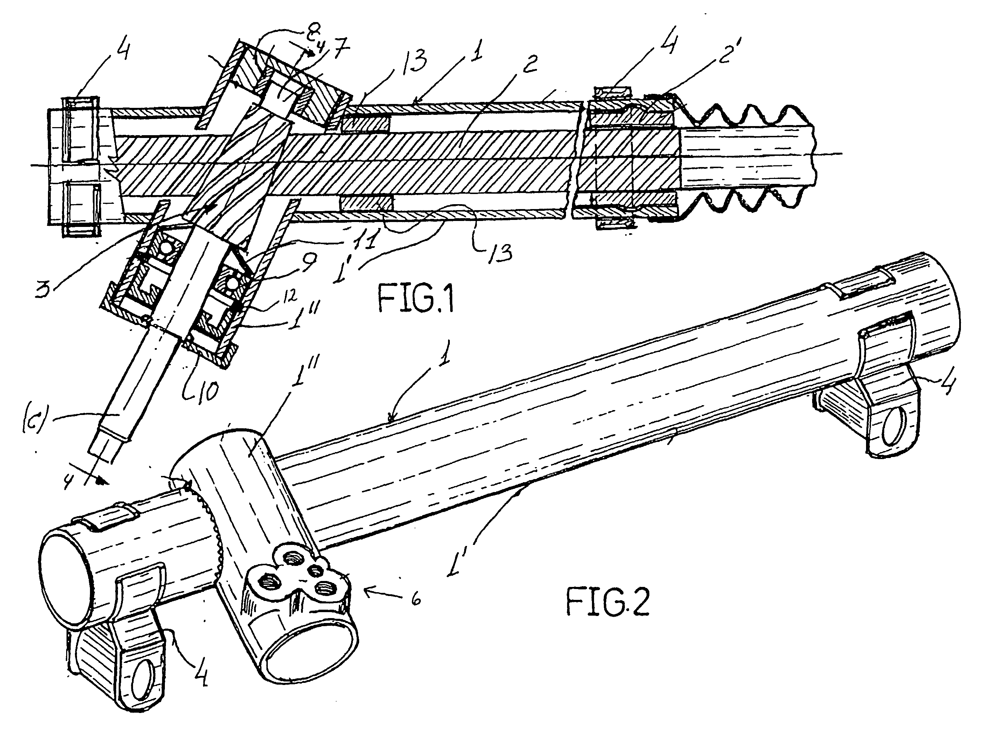

In Fig. 1, which is an illustration of a steering control linkage for a motor vehicle which incorporates the inventive improvements, the housing 1 is a steering control linkage housing similar to known steering control linkage housings in that it is intended as a housing to accommodate various steering control linkage components including a rack 2 and a pinion 3. The pinion 3 is mounted on the steering column shaft c. The rack is supported by way of a pillow bearing (bushing bearing) 2' disposed at the distal end of the rack.

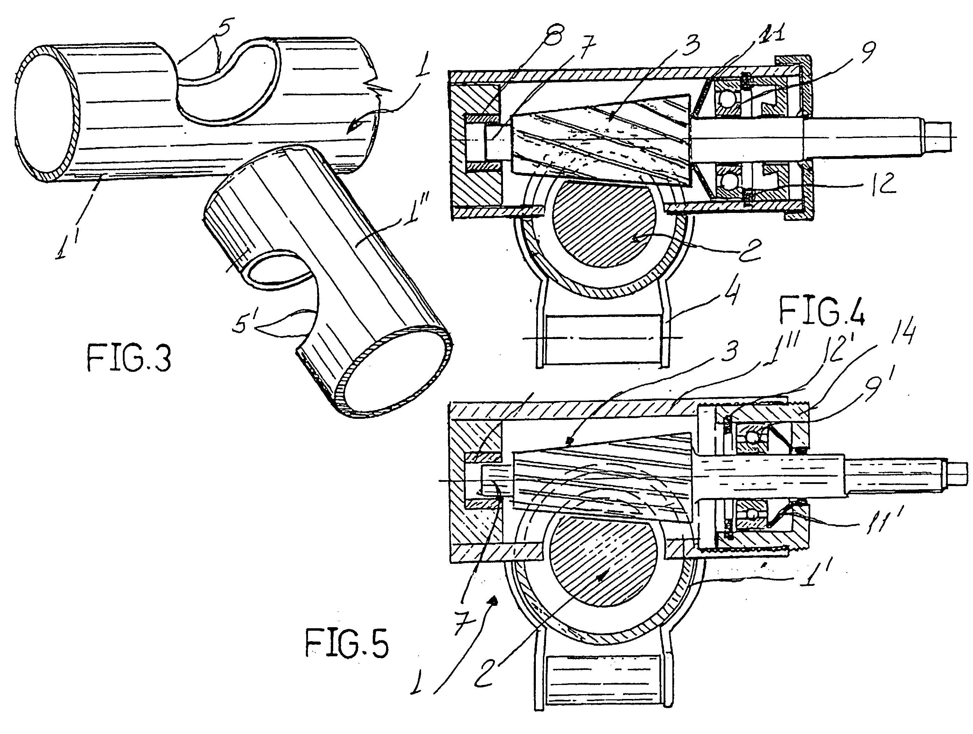

The housing 1 is comprised of two tubular elements (1', 1'') shown in more detail in Figs. 2 and 3. Preferably, elements (1', 1'') both comprise steel tubes; but alternatively the element 1' which serves as a housing element for the rack 2 may comprise a steel tube, and the element 1'' which serves as a housing element for the pinion 3 may comprise a cast iron tube.

The tubular elements 1' and 1'' of which the housing 1 is comprised are each easily machinable over their entire lengths. This feature allows precision machining to produce shoulders, seats, and like structures in their interiors, to facilitate the mounting of the rack 2 and pinion 3, and to facilitate the application of clamps, brackets, and other mounting hardware (4) for mounting the steering control linkage housing to the vehicle chassis.

The two tubes (1', 1'') are joined together with the aid of contoured openings (5, 5') cut into the respective tube walls (1', 1''). The perimeters of these openings are complementary such that appropriate support is provided when the tubes (1', 1'') are assembled together in a superposed crossed configuration the parameters of which are determined by the prescribed skew angular alignment of the steering control linkage components which results in the desired engagement of the rack 2 and pinion 3.

The contoured opening 5' in element 1'' is smaller than the contoured opening 5 in element 1', whereby when the tubes are arranged in the desired superposed position the border region around the opening 5' provides a support for the element 1'' (Fig. 4) which facilitates the establishment of the relative angular position of the elements (1', 1'') and subsequent welding or brazing. This manner of joining the two elements (1', 1'') allows variations in the angular relations depending on the needs of various steering mechanisms, and avoids the difficulties in alignment when pre-cast elements are used. Moreover, the arrangement is more adaptable from vehicle model to vehicle model and vehicle manufacturer to vehicle manufacturer; steering control linkage housings as described above can be produced for a somewhat wide range of vehicles, from the same stock pieces and with the same tooling (instead of a whole series of different casting molds).

For power-assisted steering, if the tubular element 1'' is comprised of cast iron, one may readily incorporate in it a structure 6 for mounting a valve complex, which structure 6 will have the proper configuration for good operation.

As suggested, a housing 1 thus constructed enables proper alignment of the rack bar 2 and the pinion 3, along with means of automatically positioning said rack bar 2 and pinion 3 in response to axial stresses exerted on said housing 1.

A first embodiment of the described positioning means is illustrated in Figs. 1 and 3. The dentation of the conical pinion 3 corresponds to that of the rack 2. The pinion 3 is accommodated in the tubular element 1'' of the housing 1. The pinion shaft 7 is coaxially connected to the steering column (c) and is rotationally supported and is movable to a slight degree in the axial direction, on one side by the intermediary of a bearing 8 which closes off the end of the tubular element 1'', and on the other side by an antifriction bearing 9 mounted in the opposite end region of tubular element 1'', which end region is closed off by retainer means and a conventional end cap, collectively designated with reference numeral 10.

The support means for the conical pinion 3 according to the invention incorporates an elastic organ 11 in the form of a plate spring or elastic annular piece, which organ 11 exerts a continuous pre-stress on the conical pinion 3 in the axial direction. For this purpose, elastic organ 11 is mounted between:
-- the antifriction bearing 9, which is positioned in the element 1'' with the aid of a retaining ring 12, and
-- the base of the conical pinion 3.
The prestressing exerted by elastic organ 11 tends to continuously urge the pinion 3 into engagement with the rack 2, and serves to maintain correct engagement force ("pressure") between the rack 2 and pinion 3 in the face of the influence of axial stresses which tend to produce separations and spontaneous return of the rack 2 to its normal position. This regulating effect of elastic organ 11 is in coordination with the conicity of the pinion 3.

The frictional engagement characteristics of the dentations is determined by the pre-stressing of the pinion 3 by the elastic organ 11, as a consequence of the conicity of the pinion 3. At the same time, excess engagement force between the rack 2 and pinion 3 is avoided, in that the resultant force component derived from the axial stresses, in the rack 2, is compensated. A final element of an assembly which annuls possible stresses on the rack 2 is provided by a second pillow bearing 13 which supports the rack in the neighborhood of the junction of the two tubular elements (1', 1''); this along with the conicity of the pinion 3 contributes to the proper functioning of the steering mechanism.

Fig. 5 shows a variant of the embodiment of the inventive automatic pinion-positioning means shown in Fig. 4, wherein a generally annular spring 11' acts directly on an end-disposed antifriction bearing 9' which is mounted on the shaft 7 of the conical pinion 3. In the event the pinion suffers a slight axial movement in the tubular element 1'' of the housing 1, the movement will be limited by a retaining ring 12' mounted in a threaded plug piece 14 threadedly engaged in the interior of the tubular element 1'', which plug piece 14 also surrounds the elastic organ 11'.

The described arrangements enable undesirable movements of the rack 2 to be resisted, thereby eliminating undesirable noise in the steering mechanism.

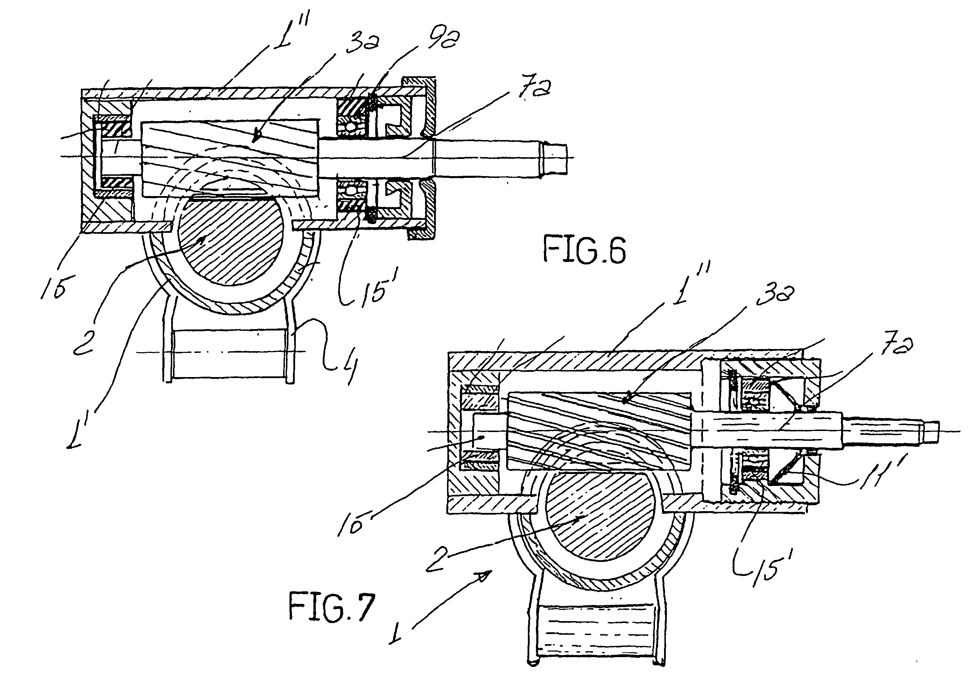

According to the solution illustrated in Fig. 6, which is outside the scope of the present invention, the means of automatically positioning the components of the steering control linkage assembly incorporated in the described housing 1 are comprised of quasi-cylindrical pieces of elastic material (15, 15') having eccentric openings, for supporting the shaft 7a of a cylindrical pinion 3a which engages a rack 2. The elastic piece 15 is disposed at the end region of shaft 7a which end region corresponds to the blind end of the tubular element 1'; the elastic piece 15' is disposed around the antifriction bearing 9a, wherewith the end of tubular element 1'' which is opposite from the end which bears the first elastic piece 15 is closed off by a retaining ring and a conventional plug piece as in the preceding embodiment.

Stresses on or in the rack 2 which tend to cause the rack to move out of and into engagement with the pinion 3a are absorbed by the elastic pieces (15, 15'), after the orientations of the eccentric openings in said elastic pieces are adjusted for normal engagement of the cylindrical pinion 3a with the rack 2; this preliminary orientation of the elastic pieces elastically pre-stresses the shaft 7a of the pinion 3a.

According to another embodiment of the present invention (Fig. 7), the positioning means provided in the preceding embodiments have been combined, inside tubular element 1'' of the housing 1. Elastic quasi-cylindrical pieces (15, 15') act on the shaft 7a of the cylindrical pinion 3a, in combination with an elastic plate spring or the like 11', whereby the influences tending to separate the rack 2 and pinion 3a are counteracted, again with the result that undesirable noises are avoided.

As may be appreciated, the described embodiments allow one to dispense with the conventional devices for regulating the engagement of the components of the steering control linkage, and to dispense with all of the appurtenances to said regulating devices. Not only are costs reduced, but more importantly the undesirable noises are eliminated.

## Claims

1. A manual or power-assisted steering control linkage assembly for automotive vehicles, including a housing (1) having articulated mounting means (4) at its extremities for fixing the housing (1) to the chassis of the vehicle, the housing (1) being acted upon by axial stresses, wherewith a complex component of said housing (1) being formed from two tubular housing elements (1', 1") disposed at an angle to each other, one (1') of the two tubular housing elements (1', 1") extending transversely to the vehicle chassis, and the complex housing component accommodating steering system components cooperating with a steering column shaft (c) by a rack and pinion arrangement (2, 3) said rack and pinion arrangement (2, 3) comprising:
a rack bar (2) connected to wheels of a vehicle via articulated connections, the rack bar (2) being supported and guided in sliding movement by an end-disposed pillow bearing (2') disposed in an interior of one tubular housing element (1') oriented transversely to the vehicle chassis, and
a pinion (3) mounted in the other (1") of the two tubular housing elements (1', 1"), the pinion (3) coordinating with the steering column shaft (c) and engaging the rack (2), said pinion (3) being rotationally supported by a pair of bearings (8, 9) at respective ends of said other tubular housing element (1"),
the two tubular housing elements (1', 1") including respective metallic tubes of different length, bearings and supports (2 ' , 13, 8, 9) f or the rack bar (2) and pinion (3) being installed in the two tubular housing elements (1', 1"), the two tubular housing elements (1', 1") being joined in a superposed arrangement by a bead of welding or brazing material disposed at the edges of respective openings (5, 5') in the walls of said two tubular housing elements (1', 1"), the openings (5, 5') being of different dimensions and corresponding different shapes, to form an angular junction of said two tubular housing elements (1', 1") in a superposed orientation corresponding to a desired angular alignment of the steering control linkage, and to provide a communication space between said two tubular housing elements (1', 1") to accommodate engagement of the pinion (3) with the rack (2) when the rack (2) is housed in the longer (1') of said two tubular housing elements (1', 1") and the pinion (3) being housed in the shorter (1") of said two tubular housing elements (1', 1") and said longer tubular housing element (1') having, at a location intermediate in said longer tubular housing element and close to the superposed openings (5, 5'), a second interior pillow bearing (13) for sliding support of the rack bar (2);
**characterised in that** positioning means (11) are provided for automatically positioning the pinion (3) in engagement with the rack (2) in response to fluctuations in the engagement of the pinion (3) and rack (2) to eliminate undesirable noise in the steering mechanism, said positioning means (11) comprising an elastic organ (11) mounted coaxially around a pinion shaft (7) so as to continuously urge the pinion (3) in the axial direction into engagement with the rack (2) and to allow slight axial displacement of said shaft (7).

2. The steering control linkage assembly according to Claim 1, wherein said pinion (3) is conical and said elastic organ (11) is comprised of an annular-shaped plate spring disposed coaxially around the pinion shaft (7) of the conical pinion (3) between a base of the pinion (3) and a support bearing (9) for the pinion shaft (7).

3. The steering control linkage assembly according to claim 1, wherein said pinion (3) is conical and said elastic organ (11) is comprised of an annular-shaped plate spring disposed coaxially with the pinion shaft (7) of the conical pinion (3) between a bearing (9') installed on said pinion shaft (7) and a base of a plug piece (14) surrounding said bearing (9'), the plug piece (14) being f ixed by screw means to an end of the shorter tubular housing element (1") located opposite to an end where the end support bearing (8) of the pinion shaft (7) is disposed.

4. The steering control linkage assembly according to any of the preceding claims, wherein said positioning means also include a pair of cylindrically shaped organs (15, 15') comprised of elastic material, disposed radially outwardly of and concentrically with an end bearing (8a) and the support bearing (9a) of the pinion (3a) mounted in the interior of the shorter tubular housing element (1"), the said shaped organs (15, 15') having internal openings eccentrically disposed in relation to a geometric axis of the said shaped organs (15, 15') to selectively urge the pinion shaft (7a) toward the rack (2).

5. The steering control linkage assembly according to claim 1, wherein said positioning means also comprise a pair of generally cylindrically shaped organs (15, 15') comprised of elastic material, disposed radially outwardly of and generally concentrically with an end support bearing (8a) of the shaft (7a) of a cylindrical pinion (3a), and a support bearing (9a) of said pinion shaft (7a) mounted in an interior of a plug piece (14), the plug piece (14) being fixed by screw means to the end of the shorter tubular housing element (1") opposite to the end where said end support bearing (8a) of the pinion shaft (7a) is disposed, and said elastic organ (11'), comprised of an elastic annular-shaped plate spring (11') urging the bearing (9a) mounted coaxially on the pinion shaft (7a), is provided between the base of the plug piece (14) and said bearing (9a) fixed to the pinion shaft (7a).

6. The steering control linkage assembly according to any of the preceding claims, wherein the two tubular housing elements (1', 1") are comprised of steel and are machinable over their entire lengths.

7. The steering control linkage assembly according to any of the preceding claims, wherein the opening (5) in the tubular housing element (1') housing the rack (2) is of larger dimensions that the opening (5') in the tubular housing element (1") housing the pinion (3), such that an edge of the rack housing element opening (5) supports a border region of the pinion housing element opening (5') so that a zone for application of the bead of weld material or brazing material is provided.

8. The steering control linkage assembly according to any of the preceding claims, wherein the two tubular housing elements (1', 1") also have housing means (6) to adapt and mount a control valve system for power-assisted steering.

## Patentansprüche

1. Ein manueller oder kraftunterstützter Lenkmechanismus für Kraftfahrzeuge weist ein Gehäuse (1) auf, das mit gelenkigen Montagemitteln (4) an seinen Enden zur Befestigung des Gehäuses (1) am Chassis des Fahrzeugs versehen ist, auf dieses Gehäuse (1) wirken axiale Spannungen ein, wobei ein komplexer Bestandteil des besagten Gehäuses (1) durch zwei rohrförmige Gehäuseelemente (1', 1") gebildet ist, die unter einem Winkel zu einander angeordnet sind; dabei erstreckt sich eines (1') der beiden rohrförmigen Gehäuseelemente (1', 1") transversal zum Fahrzeugchassis hin und nehmen die komplexen Gehäuseelemente Lenksystem-Komponenten auf, die mit einer Lenksäule (c) über eine Zahnstange- und Ritzelanordnung (2, 3) zusammenwirken, diese Zahnstange- und Ritzelanordnung (2, 3) weist
- eine Zahnstange (2), die über gelenkige Verbindungen mit Rädern eines Fahrzeugs verbunden ist, dabei wird die Zahnstange (2) gestützt und in der gleitenden Bewegung geführt durch eine am Ende angeordnete Laufbuchse (2'), welche innen in einem der rohrförmigen Gehäuseelemente (1') und transversal zum Fahrzeugchassis orientiert angeordnet ist, und
- ein Ritzel (3) auf, das in dem anderen (1") der beiden rohrförmigen Gehäuseelemente (1', 1") montiert ist, welches Ritzel (3) mit der Lenksäule (c) zusammenwirkt und im Eingriff mit der Zahnstange (2) ist, dabei ist das Ritzel (3) durch zwei Lager (8, 9) an jeweiligen Enden des besagten rohrförmigen Gehäuseelements (1") drehbar gelagert,
wobei die beiden rohrförmigen Gehäuseelemente (1', 1") jeweils metallische Rohre verschiedener Länge sowie Lager und Stützen (2', 13, 8, 9) für die Zahnstange (2) und das Ritzel (3) aufweisen, die in den beiden rohrförmigen Gehäuseelementen (1', 1") angeordnet sind und wobei die beiden rohrförmigen Gehäuseelemente (1', 1") in einer übereinander liegenden Anordnung durch Nahtbereiche aus Schweiß- oder Lötmaterial, angeordnet an den Kanten der entsprechenden Öffnungen (5, 5') der Wände der besagten beiden rohrförmigen Gehäuseelemente (1', 1"), miteinander verbunden sind, dabei sind die Öffnungen (5, 5') von verschiedener Größe und entsprechend verschiedener Form, um eine winkelige Verbindung der besagten beiden rohrförmigen Gehäuseelemente (1', 1") in einer übereinander liegenden Orientierung, entsprechend einer geforderten Winkeljustierung des Lenkmechanismus, zu bilden und einen Bereich zwischen den besagten beiden rohrförmigen Gehäuseelementen (1', 1") zu bilden, um den Eingriff des Ritzels (3) mit der Zahnstange (2) unterzubringen, wobei die Zahnstange (2) im längeren (1') der beiden rohrförmigen Gehäuseelemente (1', 1") untergebracht ist und das Ritzel (3) in dem kürzeren (1") der beiden rohrförmigen Gehäuseelemente (1', 1") untergebracht ist und das besagte längere rohrförmige Gehäuseelement (1') an einer Stelle in der Nähe der Mitte in besagtem längerem rohrförmigen Gehäuseelement und nahe an den übereinander liegenden Öffnungen (5, 5') eine zweite innere Laufbuchse (13) zur Unterstützung des Gleitens der Zahnstange (2) aufweist;
**dadurch gekennzeichnet, dass** Positionierungsmittel (11) zum automatischen Positionieren des Ritzels (3) beim Eingriff in die Zahnstange (2), die Variationen des Eingriffs von Ritzel (3) und Zahnstange (2) entgegenwirken, vorgesehen sind, um unerwünschte Geräusche im Lenkmechanismus zu eliminieren, wobei diese Positionierungsmittel (11) ein elastisches Organ (11) aufweisen, das koaxial um einen Ritzelschaft (7) montiert ist, das das Ritzel (3) ständig in axialer Richtung in Eingriff mit der Zahnstange (2) vorbelastet und nur eine geringfügige axiale Verschiebung des Ritzelschafts (7) zuläßt.

2. Der Lenkmechanismus entsprechend Anspruch 1, wobei das Ritzel (3) konisch ist und das elastische Organ (11) eine ringförmige Blattfeder aufweist, welche koaxial um den Ritzelzapfen (7) des konischen Ritzels (3) zwischen einer Basis des Ritzels (3) und einem Stützlager (9) für den Ritzelzapfen (7) angeordnet ist.

3. Der Lenkmechanismus entsprechend Anspruch 1, wobei das Ritzel (3) konisch ist und das elastische Organ (11) eine ringförmige Blattfeder aufweist, welche koaxial um den Ritzelzapfen (7) des konischen Ritzels (3) zwischen einem Lager (9'), angeordnet auf besagtem Ritzelzapfen (7), und einer Basis eines Steckteils (14), das das Lager (9') umgibt, angeordnet ist, wobei das Steckteil (14) durch Schraubteile am Ende des kürzeren rohrförmigen Gehäuseelements (1") fixiert ist; und zwar gegenüberliegend einem Ende, wo das End-Stützlager (8) des Ritzelzapfens (7) angeordnet ist.

4. Der Lenkmechanismus entsprechend einem beliebigen der vorangegangen Ansprüche, wobei besagte Positionierungsmittel auch zwei zylindrisch geformte Organe (15, 15'), die aus einem elastischen Material bestehen, aufweist, die radial nach außen von und konzentrisch mit einem Endlager (8a) sowie dem Stützlager (9a) des Ritzels (3a) angeordnet sind, welches im Inneren des kürzeren rohrförmigen Gehäuseelements (1") montiert ist, dabei haben die besagten geformten Organe (15, 15') interne Öffnungen, die exzentrisch angeordnet sind in Bezug auf eine geometrische Achse der besagten geformten Organe (15, 15'), um den Ritzelzapfen (7a) selektiv gegen die Zahnstange (2) vorzubelasten.

5. Der Lenkmechanismus entsprechend Anspruch 1, wobei besagte Positionierungsmittel auch zwei im Allgemeinen zylindrisch geformte Organe (15, 15'), die aus einem elastischen Material bestehen und die radial nach außen von und im Allgemeinen konzentrisch mit einem Endlager (8a) des Ritzelzapfens (7a) des Ritzels (3a) angeordnet sind, und ein Stützlager (9a) des besagten Ritzelzapfens (7a) aufweisen, das im Inneren eines Steckteils ( 14) montiert ist, wobei das Steckteil (14) am Ende des kürzeren rohrförmigen Gehäuseelements (1"), gegenüber dem Ende, wo besagtes End-Stützlager (8a) des Ritzelzapfens (7a) angeordnet ist, mit Schraubmitteln fixiert ist und das besagte elastische Organ (11'), das eine elastische, ringförmige Blattfeder (11') aufweist, welche gegen das Lager (9a) vorgespannt ist, koaxial auf dem Ritzelzapfen (7a) angeordnet ist, zwischen der Basis des Steckteils (14) und besagtem Lager (9a), angeordnet ist, am Ritzelzapfen (7a) befestigt ist.

6. Der Lenkmechanismus entsprechend einem beliebigen der vorangegangen Ansprüche, wobei die beiden rohrförmigen Gehäuseelemente (1', 1") aus Stahl bestehen und über ihre gesamte Länge maschinell bearbeitbar sind.

7. Der Lenkmechanismus entsprechend einem beliebigen der vorangegangen Ansprüche, wobei die Öffnung (5) im rohrförmigen Gehäuseelement (1'), welches die Zahnstange (2) aufnimmt, eine größere Abmessung aufweist als die Öffnung (5') im rohrförmigen Gehäuseelement (1"), welches das Ritzel (3) aufnimmt, in der Weise, dass eine Kante der Öffnung (5) des Zahnstangen-Gehäuseelements einen Randbereich der Öffnung (5') des Ritzel-Gehäuseelements unterstützt, so dass ein Bereich für ein Aufbringen der Nahtbereiche aus Schweiß- oder Lötmaterial erhalten wird.

8. Der Lenkmechanismus entsprechend einem beliebigen der vorangegangen Ansprüche, wobei die beiden rohrförmigen Gehäuseelemente (1', 1") auch Unterbringungsmittel (6) aufweisen, um ein Steuerventilsystem einer kraftunterstützen Lenkung anzubringen und zu montieren.

## Revendications

1. Ensemble de tringlerie de direction manuelle ou servo-assistée pour véhicules automobiles, comprenant un carter (1) présentant des moyens de montage articulés (4) au niveau de ses extrémités destinés à fixer le carter (1) au châssis du véhicule, le carter (1) étant influencé par des contraintes axiales, avec un composant complexe dudit carter (1) étant formé à partir de deux éléments tubulaires de carter (1', 1''), disposés à un angle l'un de l'autre, un (1') des deux éléments tubulaires de carter (1', 1'') s'étendant transversalement au châssis du véhicule, et le composant de carter complexe logeant des composants de système de direction coopérant avec un arbre de colonne de direction (c) par un agencement de crémaillère et de pignon (2, 3), ledit agencement de crémaillère et de pignon (2, 3) comprenant :
une barre de crémaillère (2) reliée aux roues d'un véhicule par l'intermédiaire de connexions articulées, la barre de crémaillère (2) étant supportée et guidée dans un mouvement coulissant par un palier à coussin placé à l'extrémité (2') disposée dans un intérieur d'un élément tubulaire de carter (1') orienté transversalement au châssis du véhicule, et
un pignon (3) monté dans l'autre (1'') des deux éléments tubulaires de carter (1', 1''), le pignon (3) coordonnant avec l'arbre de colonne de direction (c) et mettant en prise la crémaillère (2), ledit pignon (3) étant supporté de manière rotative par une paire de paliers (8, 9) au niveau des extrémités respectives dudit autre élément tubulaire de carter (1''),
les deux éléments tubulaires de carter (1', 1'') comprenant des tubes métalliques respectifs de différentes longueurs, des paliers et des supports (2', 13, 8, 9) pour la barre de crémaillère (2) et le pignon (3) étant installé dans les deux éléments tubulaires de carter (1', 1''), les deux éléments tubulaires de carter (1', 1'') étant joints dans un agencement superposé par un cordon de matériau de soudage ou de brasage disposé au niveau des bords des ouvertures respectives (5, 5') dans les parois desdits éléments tubulaires de carter (1', 1''), les ouvertures (5, 5') étant de différentes dimensions et de formes différentes correspondantes afin de former une jonction angulaire desdits deux éléments tubulaires de carter (1', 1'') dans une orientation superposée correspondant à un alignement angulaire souhaité de la tringlerie de direction, et afin de proposer un espace de communication entre lesdits deux éléments tubulaires de carter (1', 1'') pour loger la mise en prise du pignon (3) avec la crémaillère (2) quand la crémaillère (2) est logée dans le plus long (1') desdits deux éléments tubulaires de carter (1', 1'') et le pignon (3) étant logé dans le plus court (1'') desdits deux éléments tubulaires de carter (1', 1'') et ledit élément tubulaire plus long de carter (1') présentant, au niveau d'un emplacement intermédiaire dans ledit élément tubulaire plus long de carter et proche des ouvertures superposées (5, 5'), un second palier à coussin intérieur (13) pour un support coulissant de la barre de crémaillère (2) ;
**caractérisé en ce que** des moyens de positionnement (11) sont proposés pour positionner automatiquement le pignon (3) en mise en prise avec la crémaillère (2) en réponse aux fluctuations dans la mise en prise du pignon (3) et de la crémaillère (2) afin d'éliminer le bruit indésirable dans le mécanisme de direction, lesdits moyens de positionnement (11) comprenant un organe élastique (11) monté de manière coaxiale autour d'un arbre de pignon (7) de manière à pousser continuellement le pignon (3) dans la direction axiale en mise en prise avec la crémaillère (2) et à permettre un léger déplacement axial dudit arbre (7).

2. Ensemble de tringlerie de direction selon la revendication 1, dans lequel ledit pignon (3) est conique et ledit organe élastique (11) est composé d'un ressort à lames de forme annulaire disposé de manière coaxiale autour de l'arbre de pignon (7) du pignon conique (3) entre une base du pignon (3) et un palier-support (9) pour l'arbre de pignon (7).

3. Ensemble de tringlerie de direction selon la revendication 1, dans lequel ledit pignon (3) est conique et ledit organe élastique (11) est composé d'un ressort à lames de forme annulaire disposé de manière coaxiale avec l'arbre de pignon (7) du pignon conique (3) entre un palier (9') installé sur ledit arbre de pignon (7) et une base d'une pièce formant bouchon (14) entourant ledit palier (9'), la pièce formant bouchon (14) étant fixée au moyen de vis à une extrémité de l'élément tubulaire plus court de carter (1'') situé en face d'une extrémité où le palier-support à billes (8) de l'arbre de pignon (7) est disposé.

4. Ensemble de tringlerie de direction selon l'une quelconque des revendications précédentes, dans lequel lesdits moyens de positionnement comprennent également une paire d'organes formés de manière cylindrique (15, 15') composés de matériau élastique, disposés radialement vers l'extérieur de et de manière concentrique avec un roulement à billes (8a) et le palier-support (9a) du pignon (3a) monté à l'intérieur de l'élément tubulaire plus court du carter (1''), lesdits organes profilés (15, 15') présentant des ouvertures intérieures disposées de manière excentrique par rapport à un axe géométrique desdits organes profilés (15, 15') afin de pousser sélectivement l'arbre de pignon (7a) vers la crémaillère (2).

5. Ensemble de tringlerie de direction selon la revendication 1, dans lequel lesdits moyens de positionnement comprennent également une paire d'organes formés généralement de manière cylindrique (15, 15') composés de matériau élastique, disposés radialement vers l'extérieur de et de manière généralement concentrique avec un palier-support à billes (8a) de l'arbre (7) d'un pignon cylindrique (3a) et un palier-support (9a) dudit arbre de pignon (7a) monté dans un intérieur d'une pièce formant bouchon (14), la pièce formant bouchon (14) étant fixée au moyen de vis à l'extrémité de l'élément tubulaire plus court de carter (1'') en face de l'extrémité où ledit palier-support à billes (8a) de l'arbre de pignon (7a) est disposé, et ledit organe élastique (11'), composé d'un ressort élastique à lames de forme annulaire (11') poussant le palier (9a) monté de manière co-axiale sur l'arbre de pignon (7a), est proposé entre la base de la pièce formant bouchon (14) et ledit palier (9a) fixé à l'arbre de pignon (7a).

6. Ensemble de tringlerie de direction selon l'une quelconque des revendications précédentes, dans lequel lesdits deux éléments tubulaires de carter (1', 1'') sont composés d'acier et peuvent être usinés sur la totalité de leurs longueurs.

7. Ensemble de tringlerie de direction selon l'une quelconque des revendications précédentes, dans lequel l'ouverture (5) dans l'élément tubulaire de carter (1') logeant la crémaillère (2) est de plus grandes dimensions que l'ouverture (5') dans le logement tubulaire de carter (1'') logeant le pignon (3), de telle manière qu'un bord de l'ouverture de l'élément de carter de crémaillère (5) supporte une région frontalière de l'ouverture de l'élément de carter de pignon (5') afin qu'une zone d'application du cordon de matériau de soudage ou de brasage soit proposée.

8. Ensemble de tringlerie de direction selon l'une quelconque des revendications précédentes, dans lequel lesdits deux éléments tubulaires de carter (1', 1'') présentent également des moyens formant carter (6) pour adapter et monter un système de robinet de réglage pour une direction servo-assistée.
